# EUROPEAN PATENT SPECIFICATION

(11) **EP 1 850 036 B1**
(45) Date of publication and mention of the grant of the patent: **27.07.2011**
(21) Application number: 07104612.2
(22) Date of filing: 21.03.2007
(51) Int. Cl.: F16H 57/02, F16H 47/02, B62M 19/00

(54) **Transmission Structure of Power Unit for Vehicle**
Getriebestruktur eines Antriebsaggregates für ein Fahrzeug
Structure de transmission pour bloc d'alimentation d'un véhicule

(30) Priority: 26.04.2006 JP 2006121558
(43) Date of publication of application: 31.10.2007
(73) Proprietor: HONDA MOTOR CO., LTD., Tokyo 107-8556 (JP)
(72) Inventor: Nakatsuka, Masahiko, Saitama 351-0193 (JP); Nakano, Kenichi, Saitama 351-0193 (JP); Cho, Masaki, Saitama 351-0193 (JP); Takeuchi, Kazuhiro, Saitama 351-0193 (JP)
(74) Representative: Rupp, Christian

(56) References cited:
- DE-A1-102005 010 015
- US-A1- 2005 198 952
- US-A1- 2005 255 948
- US-B1- 6 381 957

## Description

The present invention relates to the transmission structure of a power unit for a vehicle.

Oil for operating and lubricating a hydrostatic continuously variable transmission is supplied from a central hole oil passage of a transmission shaft. In related art, oil for operating a neutral/drive switching clutch is supplied through an oil passage on the downstream side of the hydrostatic continuously variable transmission acquired by extending the central hole oil passage of the transmission shaft (for example, refer to a patent document 1).
[Patent document 1] JP-A No. 2001-140951 (Fig. 3)

In the related art, as an oil passage for operating oil of the neutral/drive switching clutch is provided on the downstream side of an oil passage in the hydrostatic continuously variable transmission, the operating pressure of the neutral/drive switching clutch lowers because of the loss of oil pressure and the solution is desired. This problem is overcome by a transmission structure of a power unit according to claim 1.

U.S. Patent No. 6,381,957 discloses an engine crankshaft and a wheel drive shaft that are connected through a static hydraulic infinitely variable transmission. The static hydraulic infinitely variable transmission has a hydraulic pump extending to an engine side of the transmission and a hydraulic motor extending to a wheel drive shaft side of the transmission and connected together using a closed hydraulic circuit. A control clutch is fitted in the transmission system between the hydraulic motor and the wheel drive shaft so that the control clutch is disengaged when the engine is idling and when operation is suspended. This US-A-6,381,957 discloses the features of the preamble of claim 1.

According to the invention, as oil is supplied to the neutral/drive switching clutch via the oil passage branched from the oil passage on the upstream side of the hydrostatic continuously variable transmission, there is no resistance in an internal passage of the hydrostatic continuously variable transmission, the connection and the disconnection of the neutral/drive switching clutch can be accelerated, and smooth starting operation is enabled.

Further according to the invention, as both accessories utilize the pressure of oil, the oil passage from the oil pump is used for both and can be simplified, and the oil passage can be miniaturized.

According to the invention, as the oil passages are provided inside the same cover, the oil passages can be shortened and compacted.
Fig. 1 is a side view showing a motorcycle 1 equivalent to one embodiment of the present invention.
Fig. 2 is a left side view showing a power unit 2 mounted in the motorcycle.
Fig. 3 is a sectional development viewed along a line III-III shown in Fig. 2.
Fig. 4 is a sectional view viewed along a line IV-IV shown in Fig. 2.
Fig. 5 is a top view showing horizontal sections of an oil pump assembly 90 and a discharge passage.
Fig. 6 is a sectional view showing the inside of a crankcase 20 viewed from the right side.
Fig. 7 shows the outside face (the right surface) of a transmission cover 73.
Fig. 8 is a sectional view viewed along a line VIII-VIII shown in Fig. 7.
Fig. 9 is a back view showing the transmission cover 73.
Fig. 10 is an enlarged sectional view showing an ND switching clutch 74.
Fig. 11 is a system diagram showing a high pressure oil passage and shows a flow of oil when an ND switching solenoid 105 is operated in a drive condition.
Fig. 12 is a system diagram showing the high pressure oil passage and shows a flow of oil when the ND switching solenoid 105 is switched to a neutral condition.
Fig. 13 shows a flow of oil when lock-up operation is applied to a hydrostatic continuously variable transmission in the drive condition.

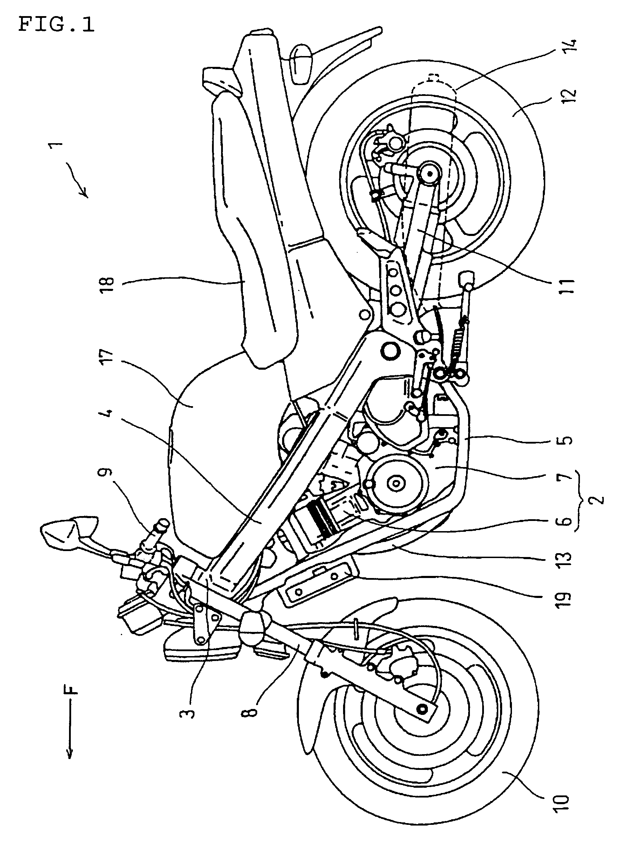

Fig. 1 is a side view showing a motorcycle 1 equivalent to a first embodiment of the present invention. An arrow F points to a forward direction of a vehicle. The motorcycle 1 is provided with a pair of main frames 4 ranging to a head pipe 3 and inclined backward and downward, and a pair of subframes 5 which are extended downward from a lower part of the head pipe 3, which are curved backward and the each end of which is connected to the each rear end of the main frame 4.

A power unit 2 in which an internal combustion engine 6 and a transmission 7 are integrated is mounted in triangular space formed by the main frame 4 and the subframe 5 when the triangular space is viewed from the side. A front fork 8 is supported by the head pipe 3 so that the front fork can be turned, a handlebar for steering 9 is mounted at the upper end of the head pipe, and a front wheel 10 is journalled to the lower end of the front fork. Respective front ends of a pair of rear forks 11 are supported by the respective rear ends of the main frames 4 so that the rear forks can be vertically rocked. A rear cushion (not shown) is mounted between the center of the rear fork 11 and the rear end of the main frame 4. A rear wheel 12 is supported by the rear end of the rear fork 11.

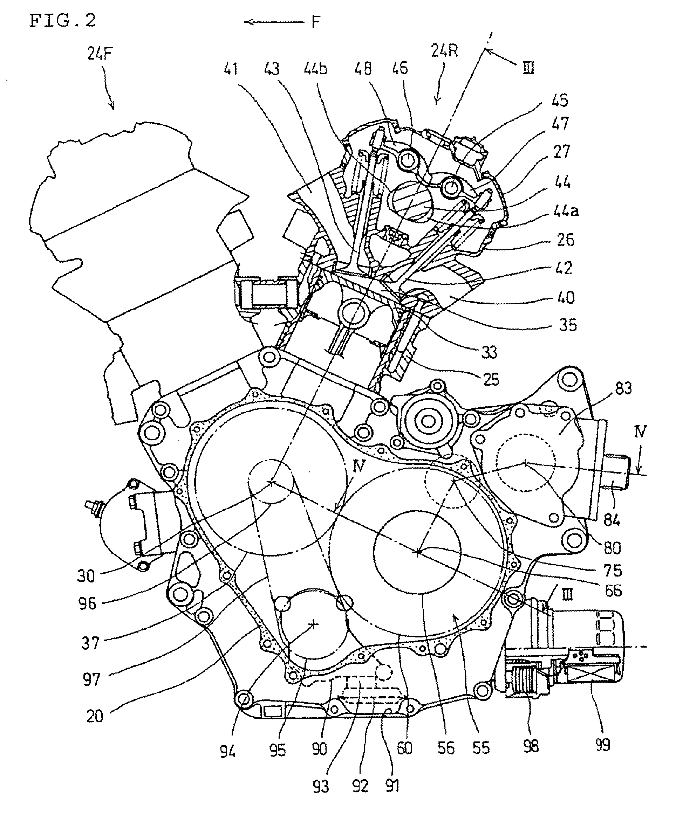

The internal combustion engine 6 is a water-cooled V-type 2-cylinder internal combustion engine and the cylinders form a V type longitudinally. A crankshaft of the internal combustion engine 6 is perpendicular in a traveling direction of the vehicle and is arranged in a lateral direction of the vehicle. A transmission shaft of the transmission 7 is parallel to the crankshaft. A rear wheel driving shaft (not shown) is connected to a connecting shaft 84 shown in Fig. 2 perpendicular to an output shaft of the transmission, is extended to the rear side of the vehicle, and reaches the rear wheel 12.

An exhaust pipe 13 connected to each exhaust port provided in a longitudinal direction of the vehicle of the two cylinders is extended in front of the internal combustion engine 6, reaches the rear of the body through the downside of the transmission 7, and is connected to an exhaust muffler 14. A fuel tank 17 is mounted on the upside of the main frame 4 and a seat 18 is mounted at the back of the fuel tank. This internal combustion engine 6 is water-cooled and cooling water the temperature of which is raised in a course for cooling the cylinder and oil is cooled by a radiator 19 attached to the front of the subframe 5.

Fig. 2 is a left side view showing the power unit 2 mounted on the motorcycle. An arrow F points to a forward direction when the power unit is mounted (also same in other drawings). As a front cylinder 24F and a rear cylinder 24R have the same internal structure, only the section of the rear cylinder 24R is shown. A crankcase is shown in a state in which a left crankcase cover 22 is detached and the position of internal main shafts, gears and sprockets is shown.

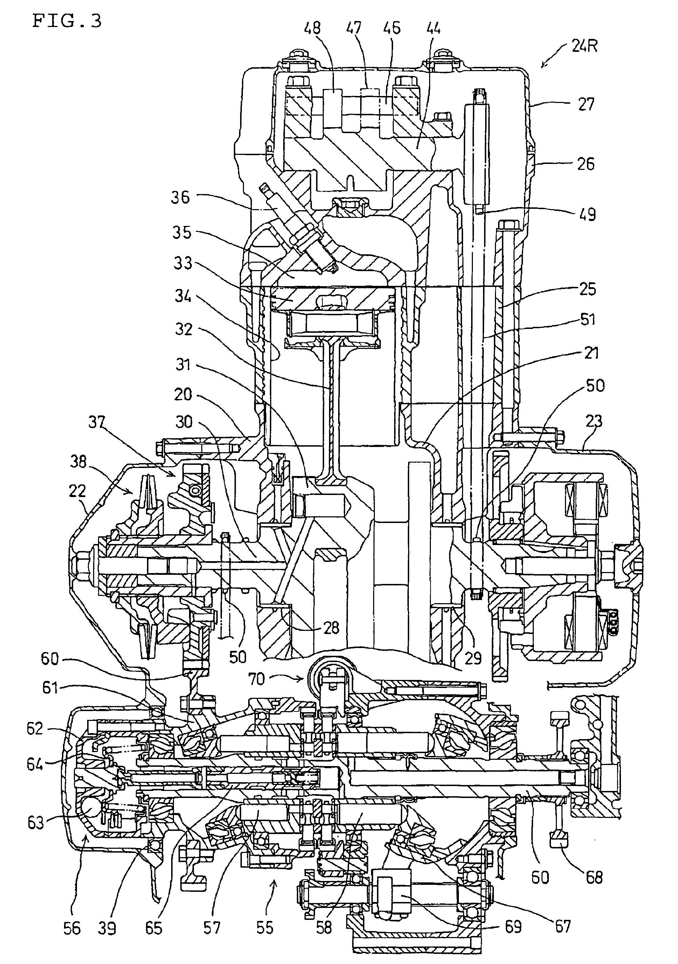

Fig. 3 is a sectional development viewed along a line III-III shown in Fig. 2. In the drawing, a section including the rear cylinder 24R, the crankcase 30 and the transmission shaft 66 of the hydrostatic continuously variable transmission 55 is developed. The rear cylinder 24R holds a piston 33 connected to a left crankpin 31.

As shown in Figs. 2 and 3, the main crust of the power unit 2 is configured by a left crankcase 20, a right crankcase 21, a left crankcase cover 22, a right crankcase cover 23, each cylinder block 25, each cylinder head 26 and each cylinder head cover 27 respectively provided in the front cylinder 24F and the rear cylinder 24R. The following description of the cylinder is based upon the rear cylinder 24R.

As shown in Fig. 3, the crankshaft 30 is rotatably supported by a left bearing 28 and a right bearing 29 held by the left and right crankcases 20, 21. A connecting rod 32 and the piston 33 are connected to the left crankpin 31 of the crankshaft 30 and the piston 33 is slidably held in a cylinder hole 34 of the cylinder block 25. A combustion chamber 35 is formed in a part opposite to the piston 33 of the cylinder head 26 and an ignition plug 36 which pierces the wall of the cylinder head 26, the end of which is opposite to the combustion chamber 35 and the rear end of which is exposed to the outside is provided.

As shown in Fig. 2, the exhaust port 40 and an intake port 41 are connected to the combustion chamber 35. The exhaust port 40 is extended forward in the front cylinder 24F and backward in the rear cylinder 24R. The intake port 41 is extended upward in space between both cylinders in both cylinders. An exhaust valve 42 is provided to the exhaust port 40 and an intake valve 43 is provided to the intake port 41. A camshaft 44 is provided in the cylinder head cover 27, an exhaust rocker arm shaft 45 and an intake rocker arm shaft 46 are provided on the upside of the camshaft 44, an exhaust rocker arm 47 and an intake rocker arm 48 provided to these arm shafts are driven by cams 44a, 44b on the camshaft 44, press the top of each stem of the exhaust valve 42 and the intake valve 43, and open and close each valve. As shown in Fig. 3, the camshaft 44 is driven by a camshaft driving chain 51 wound on a camshaft driven sprocket 49 provided to the end of the camshaft and a camshaft driving sprocket 50 provided to the crankshaft 30.

As shown in Fig. 3, the hydrostatic continuously variable transmission 55 is provided at the back of the crankshaft 30. This transmission is acquired by integrating a centrifugal governor clutch 56, a swash plate hydraulic pump 57 and a swash plate hydraulic motor 58 via the transmission shaft 66. A crankshaft output gear 37 provided to the left end of the crankshaft 30 functions in a state in which it is integrally engaged with a cam torque damper 38 provided next to the crankshaft output gear and pressed by a coned disc spring. The crankshaft output gear 37 is a backlash noise reducing gear and is configured by a thick main gear, a thin subgear held coaxially with the main gear so that the subgear can be turned and a helical spring that presses the subgear on the main gear in a circumferential direction. The crankshaft output gear 37 is engaged with a transmission input gear 60 integrated with a casing 61 of the swash plate hydraulic pump 57. The casing 61 of the hydraulic pump 57 is rotatably supported by the left crankcase cover 22 via a ball bearing 39.

A casing 62 of the centrifugal governor clutch 56 provided to the left end of the hydrostatic continuously variable transmission 55 is integrated with the casing 61 of the swash plate hydraulic pump 57. When the revolution speed of the casing 61 of the swash plate hydraulic pump 57 increases, compared with predetermined speed, a centrifugal weight 63 (for example, a steel roller or a steel ball) housed in the casing 62 of the centrifugal governor clutch 56 presses a moving member 64, a hydraulic circuit switching rod clutch valve 65 connected to the moving member is moved in the transmission shaft 66, an oil passage for circulating oil discharged from the swash plate hydraulic pump 57 in the swash plate hydraulic pump 57 is closed, an oil path is switched so that the oil discharged from the swash plate hydraulic pump 57 flows toward the swash plate hydraulic motor 58, and the hydrostatic continuously variable transmission 55 is turned started.

The swash plate hydraulic pump 57 and the swash plate hydraulic motor 58 are connected at transmission gear ratio according to an inclined condition of a swash plate 67 of the swash plate hydraulic motor 58 and shifted torque is extracted from a transmission output gear 68 fixed to the transmission shaft 66 integrated with an output part of the swash plate hydraulic motor 58.

A tilted angle of the swash plate 67 of the swash plate hydraulic motor 58 can be changed by a swash plate driving mechanism 69 driven by an electric motor. The transmission gear ratio of the hydrostatic continuously variable transmission 55 can be continuously shifted by shifting the tilted angle of the swash plate 67 of the hydraulic motor 58. When the inclination of the swash plate 67 of the hydraulic motor is zero, that is, the swash plate of the hydraulic motor is perpendicular to the transmission shaft, top transmission gear ratio is acquired. At this time, a lock-up actuator 70 acts based upon lock-up operation, an angle of the swash plate 67 of the hydraulic motor is fixed, a cylinder of the hydraulic pump 57, a cylinder of the hydraulic motor 58 and the transmission shaft 66 are integrally revolved, and efficient power transmission is made.

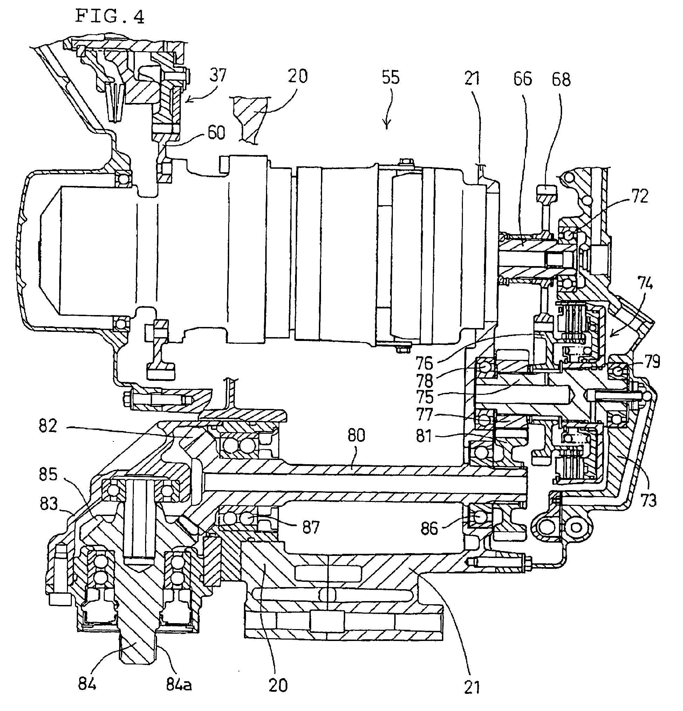

Fig. 4 is a sectional view viewed along a line IV-IV shown in Fig. 2 and shows a power transmission path from the transmission shaft 66 to a link shaft 84. A clutch shaft 75 of an ND switching clutch 74 is rotatably supported by the right crankcase 21 and a transmission cover 73 via ball bearings 78, 79 in parallel with the transmission shaft 66. A gear 76 is turnably fitted to the clutch shaft 75 via clearance. The gear 76 is engaged with the transmission output gear 68 fitted on the transmission shaft 66. The ND switching clutch 74 is provided next to the gear 76 so as to connect and disconnect power transmission between the transmission output gear 68 and the clutch shaft 75. The ND switching clutch 74 is a hydraulic multiple disc clutch for switching a neutral condition and a drive condition. The ND switching clutch is an abbreviation of "a neutral/drive switching clutch".

An output shaft 80 is rotatably supported by the left crankcase 20 and the right crankcase 21 via ball bearings 87, 86 in parallel with the clutch shaft 75. Further, the connecting shaft 84 is rotatably supported by a connecting shaft support 83 provided close to the left end of the output shaft 80 perpendicularly to the output shaft 80. The connecting shaft support 83 is attached to the outside of the left crankcase 20 (also see Fig. 2).

A gear 77 is fitted on the clutch shaft 75 next to the gear 76 of the clutch shaft 75. A gear 81 is fitted at the right end of the output shaft 80. The gear 81 is engaged with the gear 77 of the clutch shaft 75. A bevel gear 82 is integrated with the other end of the output shaft 80. A bevel gear 85 is integrated with the front end of the connecting shaft 84 and is engaged with the bevel gear 82 of the output shaft 80. A spline 84a is provided to the rear end of the connecting shaft 84 so that the rear wheel driving shaft (not shown) can be connected. The rotational output of the hydrostatic continuously variable transmission 55 is transmitted to the rear wheel via the rear wheel driving shaft by these shafts and gears.

As shown in Fig. 2, an oil pan 91 is provided in a lower part of the crankcase, oil stored there is sucked into an oil pump assembly 90 via an oil strainer 92 and an oil suction pipe 93, and is supplied to respective target locations. The oil pump 90 is driven by an oil pump driving chain 97 respectively wound on an oil pump driven sprocket 95 mounted on an oil pump shaft 94 and an oil pump driving sprocket 96 provided to the crankshaft 30. An oil cooler 98 and an oil filter for low pressure 99 are provided to the rear of the crankcase 20.

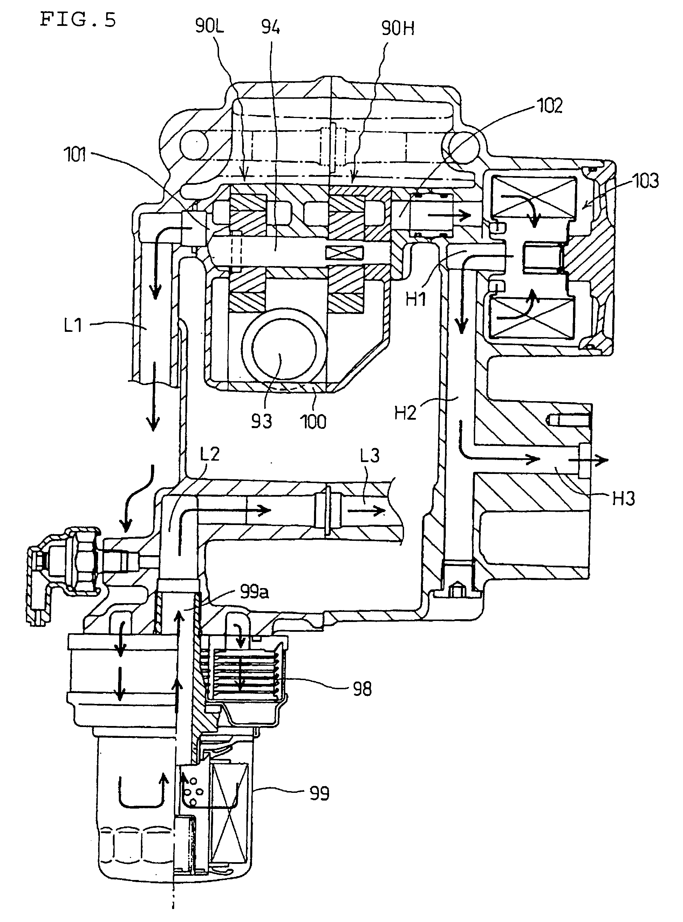

Fig. 5 is a top view showing the horizontal sections of the oil pump assembly 90 and a discharge passage. The end of the oil suction pipe 93 is seen in a part surrounded by an oil pump case 100. The oil pump assembly 90 is configured by a low pressure oil pump 90L and a high pressure oil pump 90H and they are driven by one pump shaft 94.

Oil discharged from the low pressure oil pump 90L is discharged from a low pressure oil discharge port 101 on the left side and flows into the oil cooler 98 and the oil filter 99 for low pressure via a backward oil passage L1. The oil cooled in the oil cooler and decontaminated in the oil filter for low pressure passage passes an outflow oil passage L2 that communicates with an oil outflow pipe 99a in the center of the oil filter for low pressure and flows rightward via an oil passage L3. The oil is supplied to the crankshaft and a valve train through a main gallery not shown so as to lubricate them.

Oil discharged from the high pressure oil pump 90H is discharged from a high pressure oil discharge port 102 on the right side and flows into an oil filter for high pressure 103. The oil decontaminated there flows out into an outflow oil passage H1 that communicates with the center of the oil filter for high pressure, flows backward through an oil passage H2, a direction of the flow is changed rightward into a passage H3 on the way of the oil passage H2, the oil flows upward through a path not shown, and is supplied to the hydrostatic continuously variable transmission 55 so as to operate and lubricate it.

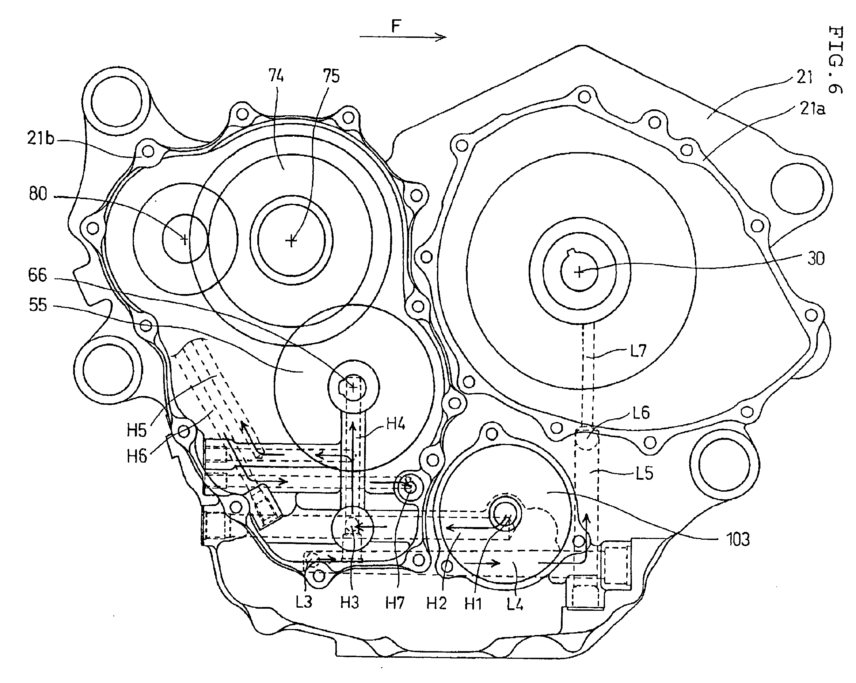

Fig. 6 is a sectional view showing the inside of the right crankcase 21 viewed from the right side, the right crankcase cover 23 and the transmission cover 73 are removed, and shows positions of inside main shafts and oil passages. As shown in Fig. 6, a reference numeral 21a denotes a fitting plane of the right crankcase cover 23 and 21b denotes a fitting plane of the transmission cover 73. Fig. 6 shows respective positions of the crankshaft 30, the transmission shaft 66, the ND switching clutch shaft 75 and the output shaft 80 and the oil filter for high pressure 103. Besides, Fig. 6 shows the oil passage for low pressure L3 and the oil passages for high pressure H1, H2, H3 respectively described above in relation to Fig. 5. The oil passage for low pressure L3 described above in relation to Fig. 5 connects with an oil passage L4 extended forward, an oil passage L5 extended upward, the main gallery L6 and an oil passage L7 extended to each crankshaft bearing. The oil passage for high pressure H3 described above in relation to Fig. 5 connects with an oil passage H4 that is extended upward and supplies operating oil and lubricating oil to the hydrostatic continuously variable transmission 55 and an oil passage H5 branched from the oil passage H4 and extended diagonally upward. The oil passage H5 connects with an ND switching solenoid 105 described later, the ND switching clutch 74 and a lock-up solenoid 106. An oil passage H6 connects with a discharge port of the lock-up solenoid 106 and operating oil is delivered to the lock-up actuator 70 shown in Fig. 3 via an oil passage H7 in a lock-up.

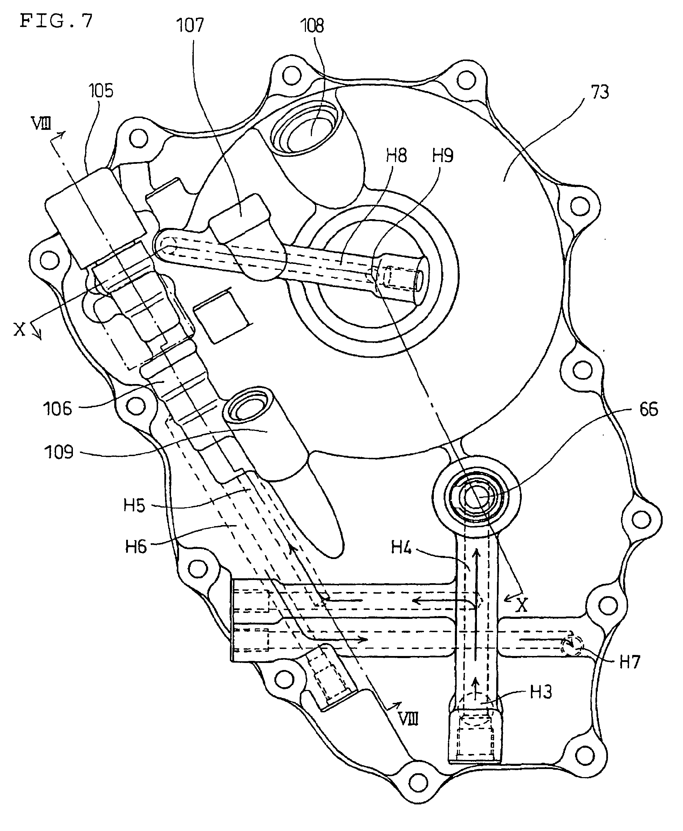

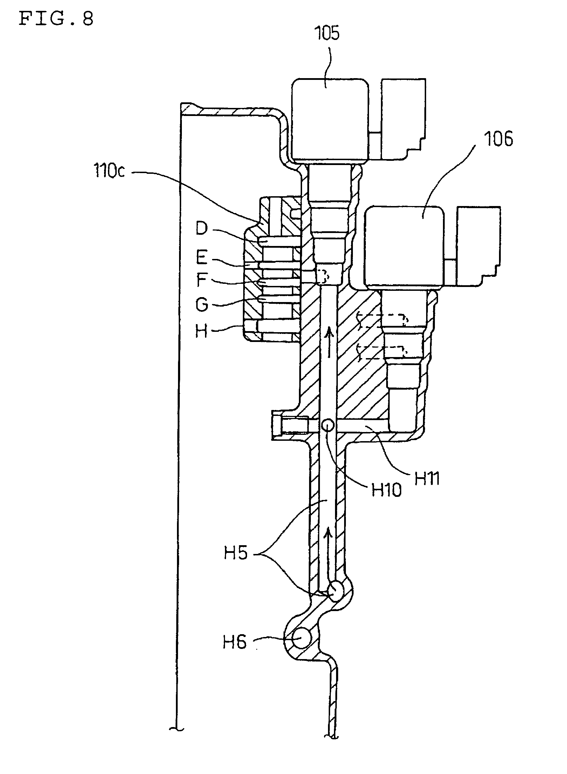

Fig. 7 shows the outside face (the right surface) of the transmission cover 73. The ND switching solenoid 105 and the lock-up solenoid 106 are provided to the outside face. The oil passages H3, H4 extended to the transmission shaft 66 of the hydrostatic continuously variable transmission 55, the oil passage H5 extended to the ND switching solenoid 105 and the oil passages H6, H7 extended from the lock-up solenoid 106 to the lock-up actuator 70 are provided inside the transmission cover. Though it is not shown in Fig. 7, an ND switching spool valve 110 shown in Fig. 8 is provided on the back side of the ND switching solenoid 105. Oil passages H8, H9 extended from the ND switching spool valve 110 to the clutch shaft 75 of the ND switching clutch 74 are provided inside a convex part of the outside face of the transmission cover 73. An N sensing pressure switch 107 is provided to the oil passage H8. An oil filler cap 108 and an oil level gauge 109 are also provided on the outside face of the transmission cover. The ND switching spool valve is an abbreviation of a neutral/drive switching spool valve and the N sensing pressure switch is an abbreviation of a neutral sensing pressure switch.

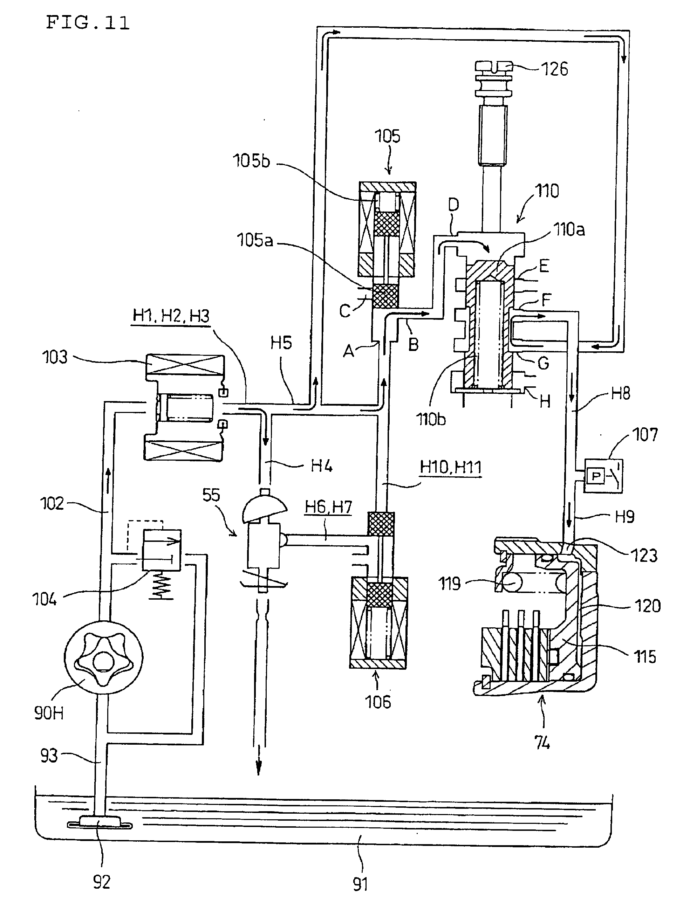

Fig. 8 is a sectional view viewed along a line VIII-VIII shown in Fig. 7. The ND switching spool valve 110 is provided on the back side of the ND switching solenoid 105. Fig. 8 shows a section of its valve case 110c. Reference characters D, E, F, G, H in Fig. 8 correspond to reference characters of ports of the ND switching spool valve 110 shown in Fig. 11. Besides, Fig. 8 shows oil passages H10, H11 branched from the oil passage H5 extended to the ND switching solenoid 105 and extended to the lock-up solenoid 106.

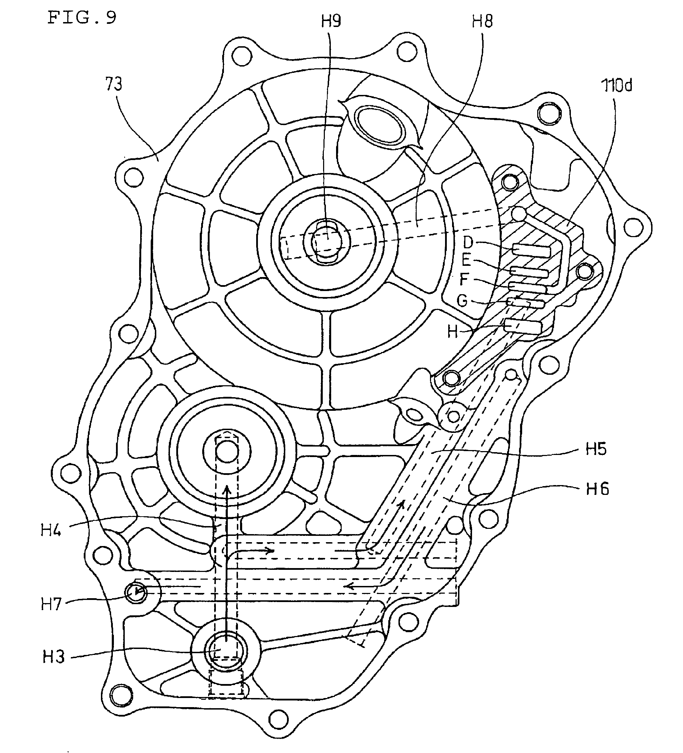

Fig. 9 is a back view showing the transmission cover 73. Fig. 9 shows a contact surface 110d opposite to the back of the transmission cover 73 of the valve case 110c of the ND switching spool valve 110 provided to the back of the transmission cover 73. The reference characters D, E, F, G, H in Fig. 9 correspond to the reference characters of the ports of the ND switching spool valve 110 shown in Fig. 11.

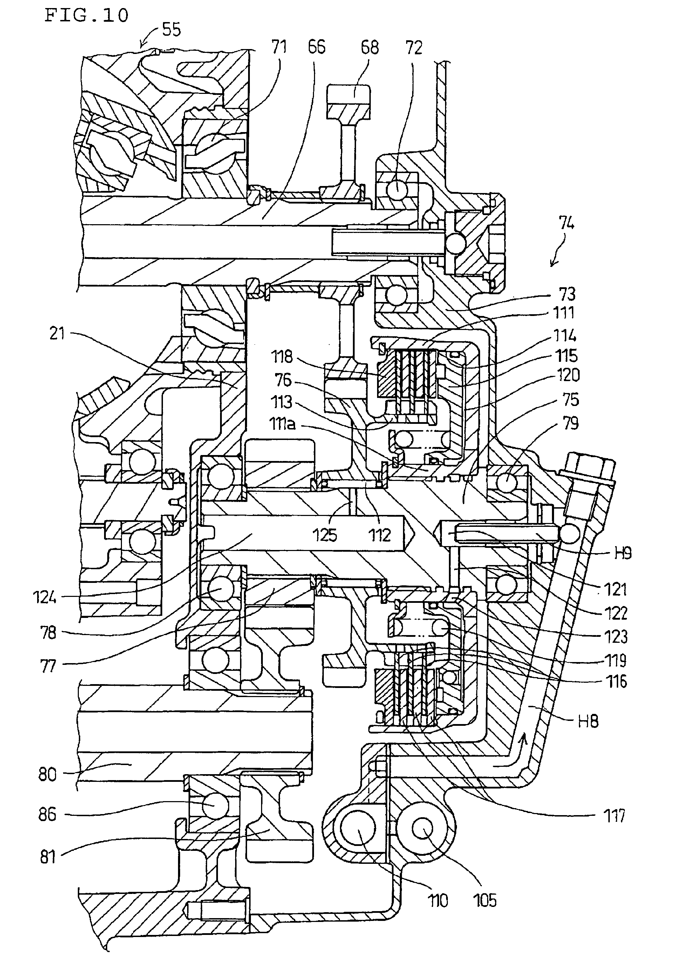

Fig. 10 is an enlarged sectional view showing the vicinity of the ND switching clutch 74 shown in Fig. 4. Fig. 10 shows a section viewed along a line X-X in Fig. 7 of the transmission cover 73. As shown in an upper part of Fig. 10, the right end of the transmission shaft 66 of the hydrostatic continuously variable transmission 55 is rotatably supported by a ball bearing 71 held by the right crankcase 21 and a ball bearing 72 held by the transmission cover 73. The transmission output gear 68 is fixed between both ball bearings of the transmission shaft 66 with the transmission output gear connected via splines. As shown in a lower part of Fig. 10, the right end of the output shaft 80 of the power unit is rotatably supported by a ball bearing 86 held by the right crankcase 21. A gear 81 is fixed at the end of the output shaft 80 with the gear connected via splines. The ND switching clutch 74 is provided between the transmission shaft 66 and the output shaft 80. The clutch shaft 75 is rotatably supported by the ball bearing 78 held by the right crankcase 21 and the ball bearing 79 held by the transmission cover 73.

The ND switching clutch 74 is configured by a bottomed cylindrical clutch outer 111 a boss 111a of which is connected to the clutch shaft 75 via splines, a clutch inner 113 which is integrated with a gear 76 supported by the clutch shaft 75 via a needle bearing 112 so that the gear can be relatively turned and an inner end of which is concentrically arranged in the clutch outer 111, a piston 115 which is slidably fitted into a cylinder hole 114 formed in the clutch outer 111, plural driving friction plates 116 which is slidably fitted to the periphery of the clutch inner 113 via splines, plural driven friction plates 117 which is slidably fitted to an inner surface of the clutch outer 111 via splines and arranged alternately with the driving friction plate, a pressed plate 118 fixed opposite to the piston 115 with a group of the friction plates 116, 117 between them, and a return spring 119 that presses the piston 115 on the bottom of the clutch outer. An oil pressure chamber 120 is formed between the bottom of the clutch outer and the piston 115.

A hollow part 112 is formed at the right end of the clutch shaft and the oil passages H8, H9 communicate with the hollow part 121. In the oil passages H9, H8, the supply of oil is controlled by the ND switching solenoid 105 and the ND switching spool valve 110. The hollow part 121 communicates with the oil pressure chamber 120 via an oil hole 122 provided in a radial direction of the clutch shaft 75 and an oil gateway 123 provided to the boss 111a of the clutch outer 111. A hollow part 124 and an oil hole 125 are also formed in a left half of the clutch shaft 75 and oil is supplied to the needle bearing 112 from an oil passage not shown via them.

When the ND switching solenoid 105 shown in Fig. 10 is electrified by operation by a rider of the vehicle and oil supplied via the ND switching spool valve 110 is supplied to the oil pressure chamber 120 from the oil passages H8, H9 via the hollow part 121, the group of the friction plates 116, 117 is integrally turned with the group held between the piston 115 and the pressed plate 118 and motive power transmitted to the gear 76 is transmitted to the clutch shaft 75 via the ND switching clutch 74. The gear 77 fitted on the clutch shaft 75 is engaged with the gear 81 fitted on the output shaft 80 and hereby, the motive power transmitted to the clutch shaft 75 is transmitted to the output shaft 80.

Fig. 11 is a system diagram showing a high pressure oil passage in this embodiment and shows no low pressure oil passage. Fig. 11 shows a flow of oil when the ND switching solenoid 105 is operated to be in the drive condition and is electrified. As shown in Fig. 11, oil is sucked up to the high pressure oil pump 90H from the oil pan 91 in the lower part via the oil strainer 92 and the oil suction pipe 93 and is delivered to the high pressure oil filter 103 via the high pressure oil discharge port 102. A relief valve 104 is provided to the high pressure oil pump 90H so that the oil pressure of the oil discharged from the high pressure discharge port 102 is fixed. The oil discharged from the high pressure oil filter 103 is delivered to the hydrostatic continuously variable transmission 55 via the oil passages H1, H2, H3, H4 as operating oil and lubricating oil. Further, the oil is delivered to the ND switching solenoid 105 and the ND switching spool valve 110 via the oil passage H5 branched from the oil passage H4.

The ND switching solenoid is electrified in the drive condition, a valve element 105a is pulled by the solenoid against the pressure of a helical spring 105b, and ports A, B are opened. At this time, oil enters a top of a valve element 110a of the ND switching spool valve from the ports A, B via a port D of the ND switching spool valve 110, presses down the valve element 110a against the pressure of a helical spring 110b, and opens ports F, G. Oil directly delivered to the ND switching spool valve 110 enters the ND switching spool valve via the port G, flows out from the port F via a small-diameter part of the valve element 110a, enters the oil pressure chamber 120 of the ND switching clutch 74 via the oil passages H8, H9 and the oil gateway 123, increases pressure in the oil pressure chamber, presses the piston 115 against the pressure of the return spring 119, and the ND switching clutch 74 is let in to turn into the drive condition.

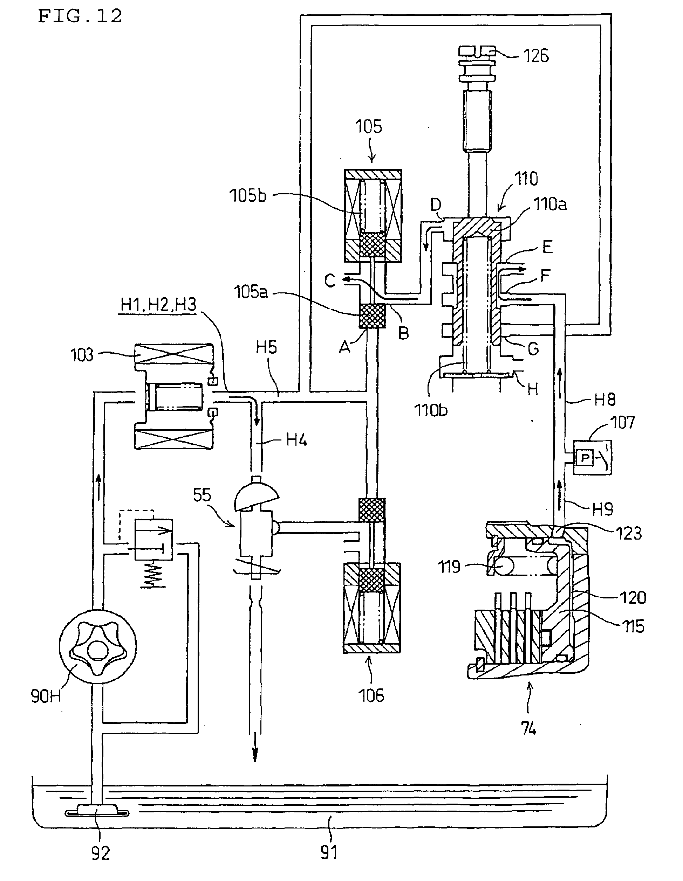

Fig. 12 is a system diagram showing the high pressure oil passage and shows a flow of oil when the ND switching solenoid 105 is switched to the neutral condition. When the ND switching solenoid 105 is switched to the neutral condition, electrification to the solenoid is disconnected, electromagnetic force that pulls the valve element is lost, the valve element is pressed by the helical spring 105b and closes the port A, and opens the ports B, C. Then, oil at the top of the ND switching spool valve 110 flows out into the crankcase via the port D of the ND switching spool valve and the ports B, C of the ND switching solenoid, and returns to the oil pan. When pressure at the top of the ND switching spool valve 110 is lost, the valve element 110a is pressed and moved by the helical spring 110b, closes the port G, and opens the ports E, F. Then, oil in the oil pressure chamber 120 of the ND switching clutch 74 is pressed by the piston 115 pressed by the return spring 119, reversely flows through the oil gateway 123 and the oil passages H9, H8, flows out into the crankcase via the ports F, E of the ND switching spool valve, and returns to the oil pan. Hereby, the ND switching clutch 74 is let out to turn into the neutral condition. The N sensing pressure switch 107 is provided on the way of the oil passage H8. This pressure switch prevents more oil than oil required in an oil passage system in the switching clutch that communicates with the continuously variable transmission from flowing out and smoothes the motion of the switching clutch when it is restarted.

To turn the system into the drive condition again, the ND switching solenoid 105 has only to be electrified, however, when the ND switching solenoid 105 is not normally operated because of the failure of an electrifying system and others, an emergency bolt 126 provided to the top of the ND switching spool valve 110 is turned so as to mechanically move the valve element 110a, the ports F, G are opened, and oil can be delivered into the ND switching clutch 74.

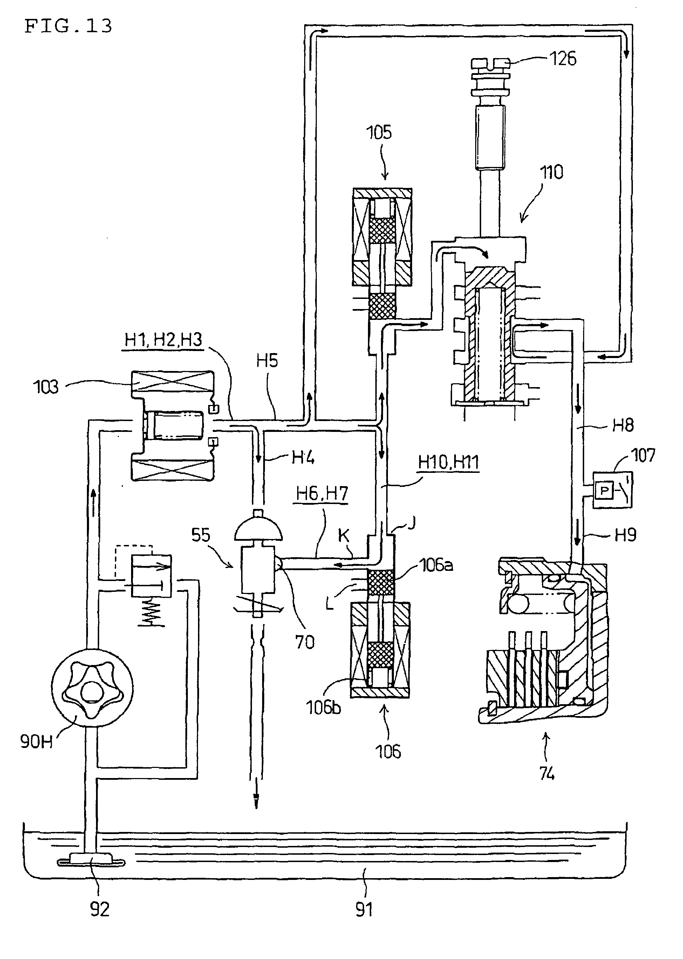

Fig. 13 shows a flow of oil when lock-up operation is applied to the hydrostatic continuously variable transmission in the drive condition. When the lock-up solenoid 106 is electrified by lock-up operation while the swash plate of the hydraulic motor of the hydrostatic continuously variable transmission is turned perpendicular to the transmission shaft to be top transmission gear ratio, a valve element 106a is pulled by the solenoid 106 against the pressure of a helical spring 106b, ports J, K are opened, oil is supplied to the lock-up actuator 70 (also see Fig. 3) from the oil passages H10, H11 (also see Fig. 8) via the ports J, K and the oil passages H6, H7 (also see Fig. 6), an angle of the swash plate 67 of the hydraulic motor is fixed by the action of the lock-up actuator 70, and motive power is efficiently transmitted. When a lock-up condition is released, electrification is disconnected by operation. At this time, as the valve element 106a is pressed by the pressure of the helical spring 106b, the port J is closed and the ports K, L are opened, oil that pressurizes the lock-up actuator 70 is discharged into the crankcase via the oil passages H6, H7 and the ports K, L, is returned to the oil pan, and the lock-up condition is released.

As described above in detail, the following effect is produced by the transmission structure of the power unit for the vehicle in this embodiment.
(1) As oil is supplied to the ND switching clutch 74 from the oil passage H5 branched from the oil passage H4 on the upstream side of the hydrostatic continuously variable transmission 55, there is no resistance in the internal passages of the hydrostatic continuously variable transmission 55, the connection of the ND switching clutch 74 can be accelerated and smooth starting operation is enabled.
(2) The oil passages H10, H11 that connects with the lock-up actuator 70 are branched from the oil passage H5 that connects with the ND switching clutch 74. As both accessories utilize the pressure of oil, the oil passage from the oil pump 90H is used for both and can be simplified, and the oil passages can be miniaturized.
(3) The rotation axis of the hydrostatic continuously variable transmission 55 and that of the ND switching clutch 74 are parallel and the end of the ND switching clutch is covered with the transmission cover 73. As the oil passage H4 that connects with the hydrostatic continuously variable transmission 55 and the oil passages H5, H8, H9 that connect with the ND switching clutch 74 are both provided inside the transmission cover 73, the oil passages can be shortened and compacted.
(4) As the starting clutch is located above, the oil pressure of operating oil when the clutch is let out can be promptly reduced and clutch disengagement performance is enhanced.

- 2: Power unit,
- 6: Internal combustion engine,
- 7: Transmission,
- 12: Rear wheel,
- 55: Hydrostatic continuously variable transmission,
- 66: Transmission shaft,
- 67: Swash plate of hydraulic motor,
- 69: Swash plate driving mechanism,
- 70: Lock-up actuator,
- 73: Transmission cover,
- 74: ND switching clutch,
- 75: Clutch shaft,
- 90: Oil pump assembly,
- 90L: Low pressure oil pump,
- 90H: High pressure oil pump,
- 102: High pressure oil discharge port,
- 103: High pressure oil filter,
- 105: ND switching solenoid,
- 105a: Valve element,
- 105b: Helical spring,
- 106: Lock-up solenoid,
- 106a: Valve element,
- 106b: Helical spring,
- 110: ND switching spool valve,
- 110a: Valve element,
- 110b: Helical spring,
- 110c: valve case,
- 111: Clutch outer,
- 111a: Boss,
- 112: Needle bearing,
- 113: Clutch inner,
- 114: Cylinder hole,
- 115: Piston,
- 116: Driving friction plate,
- 117: Driven friction plate,
- 118: Pressed plate,
- 119: Return spring,
- 120: Oil pressure chamber,
- 121: Hollow part,
- 122: Oil hole,
- 123: Oil gateway

## Claims

1. Transmission structure of a power unit (2) for a vehicle provided with a hydrostatic continuously variable transmission (55) for shifting and transmitting driving force from an internal combustion engine (6) to a rear wheel (12), comprising:
an oil pump that is rotated by the driving force of the internal combustion engine (6) and supplies oil to the hydrostatic continuously variable transmission (55); and
a neutral/drive switching clutch (74) which is arranged between the hydrostatic continuously variable transmission (55) and the rear wheel (12), in which a hydraulic piston adjacent to each set of driving friction plates (116) and driven friction plates (117) is moved by pressure in an oil pressure chamber (120), the neutral/drive switching clutch (74) connecting and disconnecting the driving force, **characterized in that**
the transmission structure has a transmission cover (73) having a fitting plane, the transmission cover (73) being arranged transverse in relation to the axis of a transmission shaft (66);
that an oil passage (H5) to the neutral/drive switching clutch (74) is branched from an oil passage from the oil pump to the upstream side of the hydrostatic continuously variable transmission (55),
that the rotation axis of the hydrostatic continuously variable transmission (55) and that of the neutral/drive switching clutch (74) are parallel and the end of the neutral/drive switching clutch (74) is covered with the transmission cover (73);
that the rotation axis of the neutral/drive switching clutch (74) is arranged elevated versus the rotation axis of the hydrostatic continuously variable transmission (55) relative to the fitting plane of the transmission cover (73);
that said oil passage (H5) is branched diagonally from a further oil passage (H4) towards a fitting plane of the transmission cover (73) towards a neutral/drive switching solenoid (105) and is connected with said neutral/drive switching solenoid (105), the neutral/drive switching clutch (74) and a lock-up solenoid (106),
that the oil passage (H5) is provided inside the transmission cover (73),
that a second oil passage (H6) is parallel with said oil passage (H5), and
**in that** a flow in said second oil passage (H6) is reverse to a flow in said oil passage (H5).

2. The transmission structure of the power unit (2) for the vehicle according to Claim 1,
wherein: a lock-up actuator (70) that fixes transmission gear ratio is provided to the hydrostatic continuously variable transmission (55); and
an oil passage to the lock-up actuator (70) is branched from the oil passage to the neutral/drive switching clutch (74).

3. The transmission structure of the power unit (2) for the vehicle according to Claim 1 or 2, wherein oil is supplied to both the hydrostatic continuously variable transmission (55) and the neutral/drive switching clutch (74) via oil passages provided inside the same cover.

## Patentansprüche

1. Getriebestruktur einer Antriebseinheit (2) für ein Fahrzeug, welches mit einem hydrostatischen stufenlosen Getriebe (55) zum Schalten und Übertragen einer Antriebskraft von einer Brennkraftmaschine (6) zu einem Hinterrad (12) versehen ist, umfassend:
eine Ölpumpe, welche durch die Antriebskraft der Brennkraftmaschine (6) gedreht wird und Öl zu dem hydrostatischen stufenlosen Getriebe (55) zuführt; und
eine Leerlauf/Fahrt-Schaltkupplung (74), welche zwischen dem hydrostatischen stufenlosen Getriebe (55) und dem Hinterrad (12) angeordnet ist, in welcher ein hydraulischer Kolben angrenzend zu jedem Satz von Antriebskupplungsscheiben (116) und Abtriebskupplungsscheiben (117) durch Druck in einer Öldruckkammer (120) bewegt wird, wobei die Leerlauf/Fahrt-Schaltkupplung (74) die Antriebskraft verbindet und trennt, **dadurch gekennzeichnet, dass**
die Getriebestruktur eine Getriebeabdeckung (73) aufweist, welche eine Passebene aufweist, wobei die Getriebeabdeckung (73) quer hinsichtlich der Achse einer Getriebewelle (66) angeordnet ist;
dass ein Öldurchgang (H5) zu der Leerlauf/Fahrt-Schaltkupplung (74) von einem Öldurchgang von der Ölpumpe zu der stromaufwärtigen Seite des hydrostatischen stufenlosen Getriebes (55) abgezweigt ist,
dass die Drehachse des hydrostatischen stufenlosen Getriebes (55) und diejenige der Leerlauf/Fahrt-Schaltkupplung (74) parallel sind und das Ende der Leerlauf/Fahrt-Schaltkupplung (74) mit der Getriebeabdeckung (73) abgedeckt ist;
dass die Drehachse der Leerlauf/Fahrt-Schaltkupplung (74) erhöht gegenüber der Drehachse des hydrostatischen stufenlosen Getriebes (55) relativ zu der Passebene der Getriebeabdeckung (73) angeordnet ist,
dass der Öldurchgang (H5) diagonal von einem weiteren Öldurchgang (H4) in Richtung zu einer Passebene der Getriebeabdeckung (73) in Richtung zu einem Leerlauf/Fahrt-Schaltsolenoid (105) abgezweigt ist, und mit dem Leerlauf/Fahrt-Schaltsolenoid (105), der Leerlauf/Fahrt-Schaltkupplung (74) und einem Absperrsolenoid (106) verbunden ist,
dass der Öldurchgang (H5) im Inneren der Getriebeabdeckung (73) vorgesehen ist,
dass ein zweiter Öldurchgang (H6) parallel zu dem Öldurchgang (H5) ist, und
dass ein Fluss des zweiten Öldurchgangs (H6) umgekehrt zu einem Fluss in dem Öldurchgang (H5) ist.

2. Getriebestruktur der Antriebseinheit (2) für das Fahrzeug gemäß Anspruch 1,
wobei: ein Absperraktuator (70), welcher ein Übersetzungsverhältnis fixiert, an dem hydrostatischen stufenlosen Getriebe (55) vorgesehen ist; und
ein Öldurchgang zu dem Absperraktuator (70) von dem Öldurchgang zu der Leerlauf/Fahrt-Schaltkupplung (74) abgezweigt ist.

3. Getriebestruktur der Antriebseinheit (2) für das Fahrzeug gemäß Anspruch 1 oder 2, wobei Öl zu sowohl dem hydrostatischen stufenlosen Getriebe (55) als auch zu der Leerlauf/Fahrt-Schaltkupplung (74) über Öldurchgänge, welche im Inneren der gleichen Abdeckung vorgesehen sind, zugeführt wird.

## Revendications

1. Structure de transmission d'un groupe moteur (2) pour un véhicule muni d'une transmission à variation continue hydrostatique (55) pour basculer et transmettre une force d'entraînement d'un moteur à combustion interne (6) à une roue arrière (12), comprenant :
une pompe à huile qui est mise en rotation par la force d'entraînement du moteur à combustion interne (6) et fournit de l'huile à la transmission à variation continue hydrostatique (55) ; et
un embrayage de commutation point mort/entraînement (74) qui est agencé entre la transmission à variation continue hydrostatique (55) et la roue arrière (12), dans lequel un piston hydraulique adjacent à chaque jeu de plaques de frottement d'entraînement (116) et de plaques de frottement entraînées (117) est déplacé par la pression dans une chambre de pression d'huile (120), l'embrayage de commutation point mort/entraînement (74) enclenchant et désenclenchant la force d'entraînement, **caractérisée en ce que**
la structure de transmission a un couvercle de transmission (73) ayant un plan d'ajustement, le couvercle de transmission (73) étant agencé transversalement par rapport à l'axe de l'arbre de transmission (66) ;
**en ce qu'**un passage d'huile (H5) vers l'embrayage de commutation point mort/entraînement (74) bifurque à partir d'un passage d'huile allant de la pompe à huile au côté amont de la transmission à variation continue hydrostatique (55),
**en ce que** l'axe de rotation de la transmission à variation continue hydrostatique (55) et **en ce que** l'embrayage de commutation point mort/entraînement (74) sont parallèles et l'extrémité de l'embrayage de commutation point mort/entraînement (74) est couverte par le couvercle de transmission (73) ;
**en ce que** l'axe de rotation de l'embrayage de commutation point mort/entraînement (74) est agencé en élévation par rapport à l'axe de rotation de la transmission à variation continue hydrostatique (55) par rapport au plan d'ajustement du couvercle de transmission (73),
**en ce que** ledit passage d'huile (H5) bifurque en diagonale à partir d'un passage d'huile supplémentaire (H4) allant vers un plan d'ajustement du couvercle de transmission (73), vers un solénoïde de commutation point mort/entraînement (105) et est raccordé avec ledit solénoïde de commutation point mort/entraînement (105), l'embrayage de commutation point mort/entraînement (74) et un solénoïde de verrouillage (106),
**en ce que** le passage d'huile (H5) est disposé à l'intérieur du couvercle de transmission (73),
**en ce qu'**un deuxième passage d'huile (H6) est parallèle audit passage d'huile (H5), et
**en ce qu'**un écoulement dans ledit deuxième passage d'huile (H6) est inverse à un écoulement dans ledit passage d'huile (H5).

2. Structure de transmission du groupe moteur (2) pour le véhicule selon la revendication 1,
dans laquelle : un actionneur de verrouillage (70) qui fixe un rapport de vitesse est à disposition de la transmission à variation continue hydrostatique (55) ; et
un passage d'huile vers l'actionneur de verrouillage (70) bifurque du passage d'huile vers l'embrayage de commutation point mort/entraînement (74).

3. Structure de transmission du groupe moteur (2) pour le véhicule selon la revendication 1 ou 2, dans laquelle de l'huile es fournie à la fois à la transmission à variation continue hydrostatique (55) et à l'embrayage de commutation point mort/entraînement (74) via des passages d'huile disposés à l'intérieur de ce même couvercle.
